# EUROPEAN PATENT SPECIFICATION

(11) **EP 2 833 532 B1**
(45) Date of publication and mention of the grant of the patent: **25.09.2024**
(21) Application number: 12875573.3
(22) Date of filing: 29.10.2012
(51) Int. Cl.: H02M 3/335, H02M 3/337, H02M 1/00

(54) **VOLTAGE REGULATING CIRCUIT**
SPANNUNGSREGELUNGSSCHALTUNG
CIRCUIT DE RÉGULATION DE TENSION

(30) Priority: 25.04.2012 CN 201210124386
(43) Date of publication of application: 04.02.2015
(73) Proprietor: Huawei Technologies Co., Ltd., Longgang District Shenzhen, Guangdong 518129 (CN)
(72) Inventor: MENG, Yongmin, Shenzhen Guangdong 518129 (CN); XIAO, Zhiming, Shenzhen Guangdong 518129 (CN); TANG, Zhuo, Shenzhen Guangdong 518129 (CN)
(74) Representative: Pfenning, Meinig & Partner mbB
(86) International application number: PCT/CN2012/083667
(87) International publication number: WO 2013/159499

(56) References cited:
- CN-A- 1 560 988
- CN-A- 101 060 746
- CN-A- 101 673 938
- CN-A- 102 214 994
- CN-A- 102 655 377
- CN-U- 201 985 758
- DE-A1- 102004 030 117
- GB-A- 2 476 508
- JP-A- S55 136 870
- US-A1- 2012 051 095

## Description

### TECHNICAL FIELD

Embodiments of the present invention relate to circuit technologies, and in particular, to a voltage regulating circuit.

### BACKGROUND

As a technology of integrating three networks (a telecommunications network, a cable television network, and the Internet) emerges, a mobile band, MBB, becomes increasingly broader, which causes that a power of a Radio Remote Unit, RRU, increases doubly, and a diameter of a cable becomes increasingly thicker because the power increases. In addition, for a relatively remote outdoor tower station, an outdoor roof station, or a relatively large-coverage indoor place, an RRU needs to have a remote capability, and in this case, a diameter of an RRU cable becomes relatively thick, so that costs of an RRU solution are increased, for example, an RRU remote terminal becomes larger, outgoing cables of a cabinet and a power distribution box are thicker, space needs to be increased, and an extra switching component is required, which are not beneficial to normalized design of a product.

In the prior art, a voltage boosting circuit for direct voltage boosting is disclosed. In the circuit, a voltage source is connected to a converter directly, and after the voltage source is converted by the converter, a required voltage is output.

However, by using the foregoing voltage boosting circuit, without considering a voltage value of an original voltage source, all powers of the voltage source pass through a whole converter directly, which easily causes low efficiency and high power consumption of a whole voltage boosting circuit in a process of boosting a voltage, and further brings a heat dissipation problem to a system that includes a voltage boosting circuit, so that the volume of the system is increased and costs of the system are increased.

DE 102004030117 A1 discusses a current supply system comprising a battery providing a source voltage, a switching unit which implements a turn on-off process in order to produce a pulsed current of the source voltage, an insulating transformer increasing, in response to the pulsed current, the source voltage to a increased or transformed voltage higher than the source voltage, a capacitor for buffering the increased or transformed voltage and to provide increased or transformed voltage to a sensitive electrical device and a control unit, which controls the switching unit in such a way that the increased or transformed voltage coincides with a nominal voltage.

JP 55-136870 A discusses a power supply comprising a switching circuit, a transformer and a rectifier/smoothing circuit wherein the output voltage is coupled with the input voltage so that addition or subtraction may be performed. An input DC voltage is converted to an AC voltage via a switching circuit, the AC voltage is transformed via an insulated transformer and rectified via a rectifier/smoothing circuit. The output voltage of the rectifier/smoothing circuit is coupled so that another output voltage is obtained as a result of addition or subtraction to the input voltage.

US 2012/0051095 A1 discusses a power generating system configured to provide direct current (DC) power to a DC link. The system includes a first power generation unit configured to output DC power. The system also includes a first DC to DC converter comprising an input section and an output section. The output section of the first DC to DC converter is coupled in series with the first power generation unit. The first DC to DC converter is configured to process a first portion of the DC power output by the first power generation unit and to provide an unprocessed second portion of the DC power output of the first power generation unit to the output section.

GB 2476508 A discusses a voltage compensation system for photovoltaic modules including a photovoltaic module biasing means connected in series with a series string of photovoltaic modules. The biasing means may be a DC-DC converter. It is operable to generate a controllable bias voltage for modulating an output voltage of the photovoltaic modules to produce the compensated voltage output. A maximum power point (MPP) tracking algorithm may control the DC-DC converter. The voltage at the output terminals remains largely constant under the control of an inverter. Each string therefore operates at an optimum do voltage according to string conditions to improve efficiency.

### SUMMARY

Embodiments of the present invention provide a voltage regulating circuit, so as to solve a problem of low efficiency and high power consumption of a voltage boosting circuit in the prior art.

A first aspect of the present invention provides a voltage regulating circuit, including:
a main loop unit, configured to output, according to an input signal of a voltage source, a first voltage signal whose voltage value is equal to a voltage value of the voltage source;
a voltage boosting unit, configured to output a second voltage signal according to the input signal, where a sum of the second voltage signal and the first voltage signal forms an output signal of the voltage regulating circuit; and
a switching control unit, configured to compare the first voltage signal with a preset first reference voltage, and when the first voltage signal is greater than or equal to the first reference voltage, control the second voltage signal output by the voltage boosting unit to be zero wherein a short-circuit switch is disposed between the output ends of the voltage boosting unit; and
the short-circuit switch is connected to the switching control unit, so that the switching control unit controls, when it is determined that the first voltage signal is greater than or equal to the first reference voltage, the short-circuit switch to be closed, to enable the second voltage signal output by the voltage boosting unit to be zero, wherein, when the short-circuit switch is controlled to be closed by the switching control unit, the output ends of the voltage boosting unit are short-circuited.

It can be known from the foregoing technical solution that, the voltage regulating circuit in the embodiment of the present invention outputs a second voltage signal by using a voltage boosting unit, and a sum of the second voltage signal and a first voltage signal forms an output signal of the voltage regulating circuit. In this way, efficiency of voltage boosting in the voltage regulating circuit in the embodiment of the present invention can be improved, and power consumption of the voltage regulating circuit can be reduced, thereby reducing heat of a system in which the voltage regulating circuit is used and reducing the volume of the system.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural diagram of a voltage regulating circuit according to an embodiment of the present invention;
FIG. 2 is a schematic diagram of a topology of a voltage regulating circuit according to another embodiment of the present invention;
FIG. 3A is a schematic diagram of a topology of a voltage regulating circuit according to another embodiment of the present invention;
FIG. 3B is a schematic structural diagram of a feedback control unit in a voltage regulating circuit according to another embodiment of the present invention;
FIG. 4 is a schematic diagram of a topology of a voltage regulating circuit according to another embodiment of the present invention; and
FIG. 5 is a schematic diagram of a topology of a voltage regulating circuit according to another embodiment of the present invention.

### DESCRIPTION OF EMBODIMENTS

To make the objectives, technical solutions, and advantages of the present invention clearer, the following clearly and completely describes the technical solutions of the present invention with reference to the accompanying drawings in the embodiments of the present invention. Apparently, the following described embodiments are merely a part of the embodiments of the present invention. Based on the following described embodiments of the present invention, persons of ordinary skill in the art can obtain other embodiments which can solve the technical problem of the present invention and implement the technical effect of the present invention by equivalently altering a part of or all the technical features even without creative efforts.

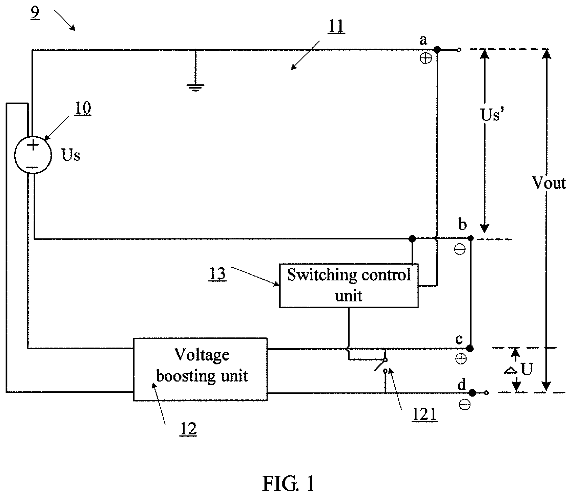

FIG. 1 is a schematic structural diagram of a voltage regulating circuit according to an embodiment of the present invention. As shown in FIG. 1, a voltage regulating circuit 9 in this embodiment includes: a main loop unit 11, a voltage boosting unit 12, and a switching control unit 13, where
the main loop unit 11 outputs, according to an input signal (Us shown in FIG. 1) of a voltage source 10, a first voltage signal Us' whose voltage value is equal to a voltage value of the voltage source 10;
the voltage boosting unit 12 is configured to output a second voltage signal ΔU according to the input signal Us, where a sum of the second voltage signal ΔU and the first voltage signal Us' forms an output signal of the voltage regulating circuit 9; and
the switching control unit 13 is configured to compare the first voltage signal Us' with a preset first reference voltage Vg, and when the first voltage signal Us' is greater than or equal to the first reference voltage Vg, control the second voltage signal ΔU output by the voltage boosting unit to be zero.

In this embodiment, the voltage boosting unit 12 and the main loop unit 11 are disposed in parallel, and they share one voltage source 10, that is, an input end of the main loop unit 11 is connected to the voltage source 10, an input end of the voltage boosting unit 12 is connected to the voltage source 10, and output ends of the main loop unit 11 (a and b shown in FIG 1) and output ends of the voltage boosting unit 12 (c and d shown in FIG 1) are connected in series to form output ends of the voltage regulating circuit 9 (a and d shown in FIG 1).

Particularly, in this embodiment, a short-circuit switch 121 is disposed between the output ends c and d of the voltage boosting unit 12, where the short-circuit switch 121 is connected to the switching control unit 13, so that the switching control unit 13 controls, when it is determined that the first voltage signal Us' is greater than or equal to the first reference voltage Vg, the short-circuit switch 121 to be closed, to enable a second voltage signal ΔU output by the voltage boosting unit 12 to be zero.

Specifically, an input end of the switching control unit 13 is connected to the output ends a and b of the main loop unit 11, receives the first voltage signal Us' output by the main loop unit 11, and the switching control unit 13 compares the first voltage signal Us' with the preset first reference voltage Vg; and if the first voltage signal Us' is less than the first reference voltage Vg, the short-circuit switch 121 is controlled to be opened by the switching control unit 13, so that the voltage boosting unit 12 outputs a second voltage signal ΔU that is not zero; and if the first voltage signal Us' is greater than or equal to the first reference voltage Vg, the short-circuit switch 121 is controlled to be closed by the switching control unit 13, that is, the output ends of the voltage boosting unit 12 are short-circuited, to enable the second voltage signal ΔU output by the voltage boosting unit 12 to be zero.

It should be noted that the preset first reference voltage Vg is usually 51.5V, which is a basic voltage used by an existing voltage class.

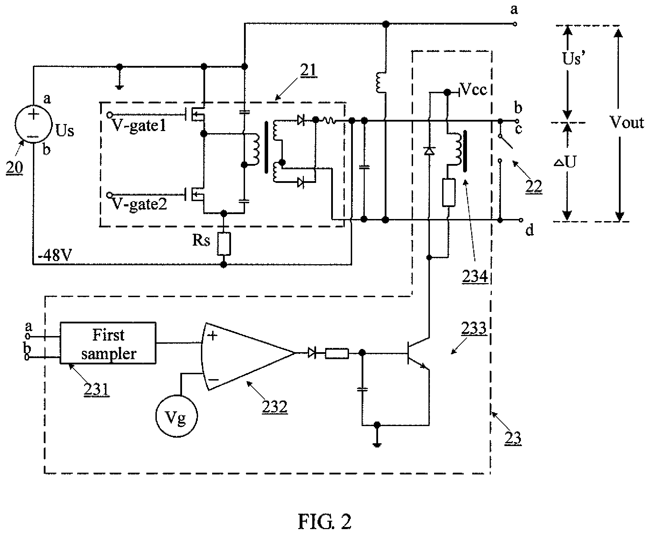

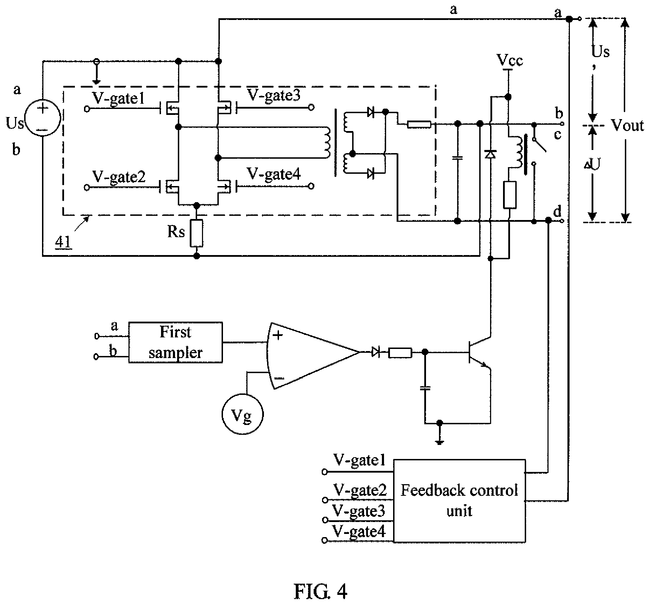

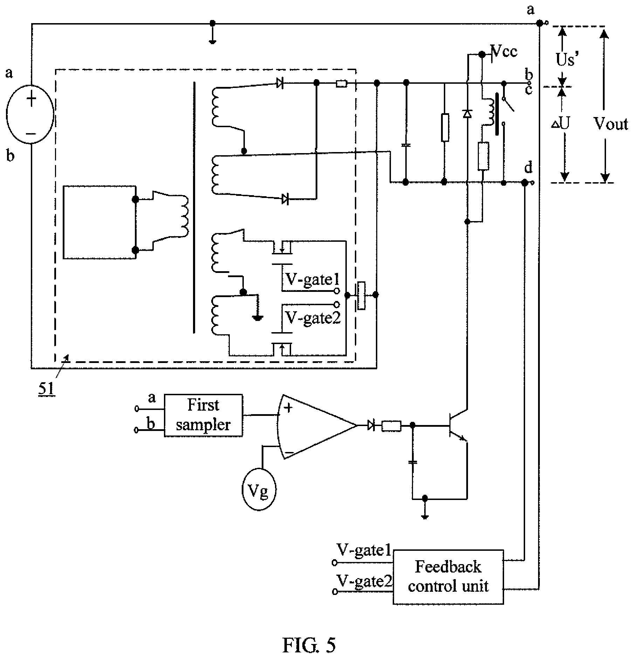

For example, the voltage boosting unit in this embodiment may be a full-bridge converter (as shown in FIG 4), a half-bridge converter (as shown in FIG 2), a push-pull converter (as shown in FIG 5), a forward converter (not shown in the figure) or a flyback converter (not shown in the figure), where an input end of the push-pull converter is connected to the voltage source, and is configured to convert the input signal Us of the voltage source into a required second voltage signal ΔU according to the input signal Us of the voltage source.

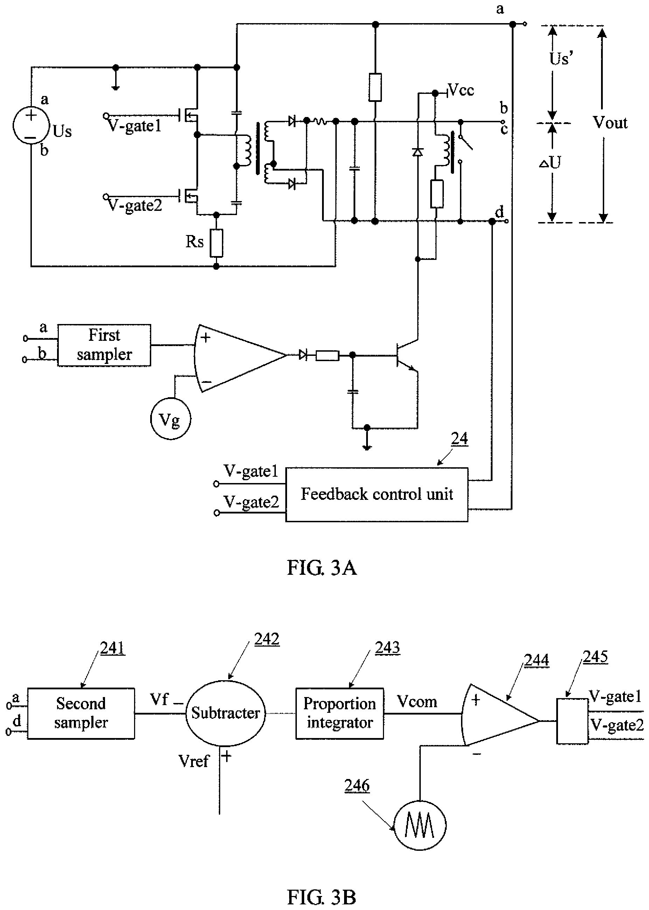

In an actual application, the voltage regulating circuit 9 further includes a feedback control unit (as shown in FIG. 3), configured to regulate, according to the output signal of the voltage regulating circuit 9, the second voltage signal ΔU output by the voltage boosting unit 12.

In other words, the feedback control unit is configured to receive the output signal Vout of the voltage regulating circuit 9, and regulate, according to the output signal Vout of the voltage regulating circuit, the second voltage signal ΔU output by the voltage boosting unit 12. In this embodiment, a voltage value and/or a pulse width of the second voltage signal ΔU is regulated according to a voltage value and/or a pulse width of the output signal Vout, to enable the second voltage signal output by the voltage boosting unit 12 to be more stable.

It can be known from the foregoing embodiment that, the voltage regulating circuit in the embodiment of the present invention outputs a second voltage signal by using a voltage boosting unit, and a sum of the second voltage signal and a first voltage signal forms an output signal of the voltage regulating circuit. In this way, efficiency of voltage boosting in the voltage regulating circuit in this embodiment can be improved, and power consumption of the voltage regulating circuit can be reduced, thereby reducing heat of a system in which the voltage regulating circuit is used and reducing the volume of the system.

FIG 2 is a schematic structural diagram of a voltage regulating circuit according to another embodiment of the present invention. As shown in FIG 2, the voltage regulating circuit in this embodiment is a specific circuit structure.

In this embodiment, output ends a and b of a main loop unit output a first voltage signal Us' whose voltage value is equal to a voltage value of a voltage source 20.

A voltage boosting unit in this embodiment is a half-bridge converter 21, as shown in a circuit diagram in a dotted box in the figure. In an actual application, the half-bridge converter 21 includes a rectifying unit inside, an input end of the half-bridge converter 21 is connected to the voltage source 20, and output ends c and d of the half-bridge converter 21 are configured to output a second voltage signal ΔU that is obtained after conversion.

It should be noted that, in this embodiment, a half-bridge converter is used as a voltage boosting unit. A transformer in the half-bridge converter shown in FIG. 2 primarily uses a half-bridge circuit and secondly uses a full-wave rectifier, and preferably, the full-wave rectifier may be a full-wave diode rectifier.

Certainly, a short-circuit switch 22 is disposed between the output ends c and d of the half-bridge converter, and closing and opening of the short-circuit switch 22 are controlled by using a relay 234 in a switching control unit 23.

In this embodiment, an output signal of the voltage regulating circuit is a sum of the first voltage signal Us' and the second voltage signal ΔU. In an actual circuit, output ends a and b of a main loop unit and output ends c and d of a voltage boosting unit may be connected in series, to enable output ends a and d of a voltage regulating circuit to output Us'+ΔU. In this embodiment, the voltage source is enabled to output, by using the voltage regulating circuit, a voltage signal that meets a requirement of a device.

The voltage regulating circuit in this embodiment is used as an example for description. Assuming that a required power of the voltage regulating circuit is 1000W and a required voltage of the voltage regulating circuit is 51V, in this case, a current is 1000W/51 V=19.6A.

When a voltage of the voltage source is Us=38V, the voltage boosting unit needs to output a second voltage signal ΔU=51V-38V=13V. In addition, a power output by the voltage boosting unit is 13V*19.6A=255W.

Assuming that the conversion efficiency of a voltage boosting unit outputting 255W is 93%, an equivalent efficiency of a voltage regulating circuit outputting 1000W is: 1-[255(1-93%)/1000]=98.2. Therefore, the overall conversion efficiency of the voltage regulating circuit in this embodiment is improved effectively, and compared with that in the prior art, power consumption of the voltage boosting unit herein is quite low.

Further, in an actual application, it is relatively easy to set a voltage boosting unit of 255W.

In addition, it can be seen from FIG 2 that, the switching control unit 23 in this embodiment mainly includes: a first sampler 231, a first voltage comparator 232, a diode, a triode 233, and a relay 234.

The first voltage comparator 232 is configured to compare a voltage value with a first reference voltage, where the voltage value is sampled by the first sampler 231 and output by the main loop unit; and when the voltage value sampled by the first sampler is greater than or equal to the first reference voltage, the first voltage comparator 232 outputs a high level, then the diode that is connected to a base of the triode 233 outputs the high level to the base of the triode 233, to enable a collector of the triode 233 to output a signal, and then the relay 234 that is connected to the collector of the triode controls a short-circuit switch to be closed, to ensure that a voltage value of a second voltage signal output by an output end of the voltage boosting unit is zero.

Certainly, an input end of the first sampler 231 is connected to the output ends a and b of the main loop unit, and an output end of the first sampler 231 is connected to a first input end of the first voltage comparator 232.

A second input end of the first voltage comparator 232 receives a given first reference voltage Vg, an output end of the first voltage comparator 232 is connected to an anode of the diode, a cathode of the diode is connected to the base of the triode 233, an emitter of the triode 233 is connected to the ground, and the collector is connected to the relay 234 that controls the short-circuit switch 22 of the voltage boosting unit.

In other words, the first voltage comparator 232 receives a voltage value of the first voltage signal, where the voltage value of the first voltage signal is sampled by the first sampler 231 and output by the main loop unit, and compares the voltage value with the given first reference voltage Vg; and when the voltage value of the first voltage signal is greater than or equal to the first reference voltage Vg, the first voltage comparator 232 outputs a high level, and outputs the high level to the base of the triode 233 by using the diode that is connected to the output end of the first voltage comparator, and then controls, by using the relay 234 that is connected to the collector of the triode, the short-circuit switch 22 to be closed, to enable the output ends c and d of the voltage boosting unit to be short-circuited, where in this case, ΔU output by an output end of the voltage boosting unit is zero.

Certainly, in another embodiment, the switching control unit 23 may also use another hardware circuit to control opening and closing of the short-circuit switch of the voltage boosting unit, and the switching control unit 23 of this embodiment is only used as an example for description.

It can be known from the foregoing embodiment that, the voltage regulating circuit in this embodiment uses a half-bridge converter to output a second voltage signal, and the second voltage signal and a first voltage signal are connected in series to form an output signal of the voltage regulating circuit. In this way, efficiency of voltage boosting in the voltage regulating circuit in this embodiment can be improved, and power consumption of the voltage regulating circuit can be reduced, thereby reducing heat of a system in which the voltage regulating circuit is used and reducing the volume of the system.

FIG. 3A is a schematic structural diagram of a voltage regulating circuit according to another embodiment of the present invention, and FIG. 3B is a schematic structural diagram of a feedback control unit in a voltage regulating circuit according to another embodiment of the present invention. As shown in FIG. 3A and FIG. 3B, a difference between a topology of a voltage regulating circuit shown in FIG. 3A and a topology of a voltage regulating circuit shown in FIG. 2 lies in that: the voltage regulating circuit in this embodiment further includes a feedback control unit 24, where the feedback control unit 24 herein is mainly configured to receive an output signal Vout of the voltage regulating circuit, and regulate, according to the output signal of the voltage regulating circuit, a second voltage signal output by a voltage boosting unit.

The feedback control unit 24 in this embodiment mainly includes: a second sampler 241, a subtracter 242, a proportion integrator 243, a second voltage comparator 244, and a pulse distributor 245, where
the subtracter 242 is configured to perform a subtraction operation on a given second reference voltage and an output signal voltage Vout that is sampled by the second sampler 241 and output by the voltage regulating circuit; and
the proportion integrator 243 is configured to perform integration regulation on an output signal of the subtracter 242; the second voltage comparator 244 is configured to compare an output signal of the proportion integrator 243 with a given triangular wave; and the pulse distributor 245 outputs a drive signal according to a signal output by the second voltage comparator 244, so that the voltage boosting unit regulates, according to the drive signal, a second voltage signal ΔU output by the voltage boosting unit.

In other words, the second sampler 241 herein performs, by using a photocoupler, isolation sampling on an output signal that is between output ends a and d, a subtraction operation is performed, in the subtracter 242, on a sampled voltage value V_{f} and a second reference voltage V_{ref}, and then a voltage V_{com} is obtained after the proportion integrator 243 performs integration regulation on the output signal of the subtracter 242.

The second voltage comparator 244 generate a Pulse Width Modulation, PWM, signal after receiving V_{com} and V_{_tri} 246 from a triangle wave generator, and after the PWM signal passes through the pulse distributor 245, drive signals V-gate for driving the voltage boosting unit are output. For example, drive signals V-gate 1 and V-gate 2 output by the pulse distributor 245 herein are used to drive a field-effect transistor of the half-bridge converter (as shown in FIG. 2); or drive signals V-gate 1, V-gate 2, V-gate 3, and V-gate 4 output by the pulse distributor 245 are used to drive a field-effect transistor of a full-bridge converter (as shown in FIG. 4).

It may be understood that when an output voltage between the output ends a and d of the voltage regulating circuit increases, the drive signals V-gate 1 and V-gate 2 decrease, to ensure that a voltage of the whole voltage regulating circuit is stable and reliable.

In other words, the subtracter 242 receives the given second reference voltage V_{ref} and a voltage value of the output signal of the voltage regulating circuit, where the output signal is sampled by the second sampler 241; and then the subtracter 242 performs a subtraction operation on the given second reference voltage and the voltage value output by the voltage regulating circuit, and inputs a result of the subtraction operation performed by the subtracter 242 into the proportion integrator 243, where an output end of the proportion integrator 243 is connected to a first input end of the second voltage comparator 244.

The first input end of the second voltage comparator 244 receives an output signal of the proportion integrator 243; a second input end of the second voltage comparator 244 is connected to a triangle wave generator 246, and receives a triangle wave output by the triangle wave generator 246; and the second voltage comparator 244 compares the output signal of the proportion integrator 243 with the triangle wave, and inputs the compared output signal into the pulse distributor 245, so that the pulse distributor outputs the drive signal.

It can be known from the foregoing embodiment that, when a first voltage signal Us' output by a main loop unit is less than or equal to a preset first reference voltage, the voltage regulating circuit in this embodiment can output a second voltage signal ΔU by using a voltage boosting unit, and a signal output by the voltage regulating circuit is a sum of the first voltage signal and the second voltage signal. In this embodiment, the conversion efficiency of the voltage regulating circuit is high and power consumption of the voltage regulating circuit is low, and less heat is generated by the voltage regulating circuit, so that the volume of a system in which the voltage regulating circuit is included can be reduced.

FIG. 4 and FIG 5 both are schematic diagrams of a topology of a voltage regulating circuit according to another embodiment of the present invention. A voltage boosting unit shown in FIG. 4 is a full-bridge converter 41; and as shown in a dotted box in FIG 4, a transformer in the full-bridge converter shown in FIG 4 primarily uses a full-bridge circuit, secondly uses a full-wave rectifier, and preferably, uses a full-wave diode rectifier, so that the full-bridge converter shown in FIG. 4 can improve the conversion efficiency of the voltage boosting unit. A voltage boosting unit shown in FIG 5 is a push-pull converter 51; and as shown in a dotted box in FIG 5, a transformer in the push-pull converter shown in FIG. 5 primarily uses a push-pull circuit, secondly uses a full-wave rectifier, and preferably, uses a full-wave diode rectifier, so that the push-pull converter 51 shown in FIG 5 can also improve the conversion efficiency of the voltage boosting unit.

In addition, the voltage regulating circuit shown in FIG. 4 and FIG 5 includes a switching control unit and a feedback control unit, where the switching control unit herein is basically the same as the switching control unit shown in FIG 3A, and the feedback control unit is basically the same as the switching control unit shown in FIG 3B, which are not described in further detail in this embodiment.

Preferably, an output end of the voltage regulating circuit shown in FIG. 2, FIG 3A, FIG 4, and FIG. 5 may further be disposed with an inductor (not shown in the figure) configured to perform filtering on an output signal of the voltage regulating circuit, so that the voltage regulating circuit can output a better signal.

Generally, the first reference voltage is 51.5V; and when a first voltage signal Us' is greater than or equal to 51.5V, a second voltage signal that can be output by the voltage boosting unit is zero, and in this case, a voltage value output by the voltage regulating circuit is Us.

When Us' is less than 51.5V, the voltage boosting unit outputs a second voltage signal that is not zero, and a voltage value of the second voltage signal is consistent with a difference obtained by subtracting Us from 51.5V.

Compared with that in the prior art, the efficiency of the voltage regulating circuit in this embodiment is greatly improved, and power consumption of the voltage regulating circuit can be reduced. Correspondingly, in this embodiment, the volume of a system in which the voltage regulating circuit is used can also be reduced.

Finally, it should be noted that the foregoing embodiments are merely intended for describing the technical solutions of the present invention, but not for limiting the present invention.

## Claims

1. A voltage regulating circuit (9), comprising:
a main loop unit (11), configured to output, according to an input signal of a voltage source (10, 20), a first voltage signal whose voltage value is equal to a voltage value of the voltage source (10, 20);
a voltage boosting unit (12, 21), configured to output a second voltage signal according to the input signal, wherein a sum of the second voltage signal and the first voltage signal forms an output signal of the voltage regulating circuit (9);
a switching control unit (13, 23), configured to compare the first voltage signal with a preset first reference voltage, and when the first voltage signal is greater than or equal to the first reference voltage, control the second voltage signal output by the voltage boosting unit (12, 21) to be zero; and
a short-circuit switch (121, 22) connected to the switching control unit (13, 23), so that the switching control (13, 23) unit controls, when it is determined that the first voltage signal is greater than or equal to the first reference voltage, the short-circuit switch (121, 22) to be closed, to enable the second voltage signal output by the voltage boosting unit (12, 21) to be zero;
**characterized in that**
the short-circuit switch (121, 22) is disposed between output ends of the voltage boosting unit (12, 21) wherein, when the short-circuit switch (121, 22) is controlled to be closed by the switching control unit (13), the output ends of the voltage boosting unit (12) are short-circuited.

2. The voltage regulating circuit (9) according to claim 1, further comprising:
a feedback control unit (24), configured to regulate, according to the output signal of the voltage regulating circuit (9), the second voltage signal output by the voltage boosting unit (12).

3. The voltage regulating circuit (9) according to claim 1 or 2, wherein the voltage boosting unit (12, 21) specifically is:
a full-bridge converter, a half-bridge converter (21), a push-pull converter, a forward converter or a flyback converter.

4. The voltage regulating circuit (9) according to any one of claims 1 to 3, wherein the switching control unit (13, 23) comprises: a first sampler (231), a first voltage comparator 232), a diode, a triode (233), and a relay (234), wherein
the first voltage comparator (232) is configured to compare a voltage value with the first reference voltage, wherein the voltage value is sampled by the first sampler (231) and output by the main loop unit (11); and
when the voltage value sampled by the first sampler (231) is greater than or equal to the first reference voltage, the first voltage comparator (232) outputs a high level, and then the diode that is connected to a base of the triode (233) outputs the high level to the base, so that the relay (234) that is connected to a collector of the (233) triode controls the short-circuit switch (121, 22) to be closed.

5. The voltage regulating circuit (9) according to any one of claims 2 to 4, wherein the feedback control unit (24) comprises: a second sampler (241), a subtracter (242), a proportion integrator (243), a second voltage comparator (244), and a pulse distributor (245), wherein
the subtracter (242) is configured to perform a subtraction operation on a given second reference voltage and an output signal that is sampled by the second sampler (241) and output by the voltage regulating circuit (9);
the proportion integrator (243) is configured to perform integration regulation on an output signal of the subtracter (242);
the second voltage comparator (244) is configured to compare an output signal of the proportion integrator (243) with a given triangular wave; and
the pulse distributor (245) outputs a drive signal according to a signal output by the second voltage comparator (244), so that the voltage boosting unit (12, 21) regulates, according to the drive signal, the second voltage signal output by the voltage boosting unit (12, 21).

6. The voltage regulating circuit (9) according to any one of claims 1 to 5, wherein an output end of the voltage regulating circuit (9) is further disposed with an inductor configured to perform filtering on the output signal of the voltage regulating circuit (9).

## Patentansprüche

1. Spannungsregelungsschaltung (9), umfassend:
eine Hauptschleifeneinheit (11), die dazu konfiguriert ist, gemäß einem Eingangssignal einer Spannungsquelle (10, 20) ein erstes Spannungssignal auszugeben, dessen Spannungswert gleich einem Spannungswert der Spannungsquelle (10, 20) ist;
eine Spannungsverstärkungseinheit (12, 21), die dazu konfiguriert ist, ein zweites Spannungssignal gemäß dem Eingangssignal auszugeben, wobei eine Summe aus dem zweiten Spannungssignal und dem ersten Spannungssignal ein Ausgangssignal der Spannungsregelungsschaltung (9) bildet;
eine Schaltsteuereinheit (13, 23), die dazu konfiguriert ist, das erste Spannungssignal mit einer voreingestellten ersten Referenzspannung zu vergleichen und, wenn das erste Spannungssignal größer oder gleich der ersten Referenzspannung ist, das durch die Spannungsverstärkungseinheit (12, 21) ausgegebene zweite Spannungssignal auf Null zu steuern; und
einen Kurzschlussschalter (121, 22), der mit der Schaltsteuereinheit (13, 23) verbunden ist, sodass die Schaltsteuereinheit (13, 23) steuert, wenn bestimmt wird, dass das erste Spannungssignal größer oder gleich der ersten Referenzspannung ist, dass der Kurzschlussschalter (121, 22) geschlossen wird, um zu ermöglichen, dass das durch die Spannungsverstärkungseinheit (12, 21) ausgegebene zweite Spannungssignal Null ist;
**dadurch gekennzeichnet, dass**
der Kurzschlussschalter (121, 22) zwischen Ausgabeenden der Spannungsverstärkungseinheit (12, 21) angeordnet ist, wobei, wenn der Kurzschlussschalter (121, 22) gesteuert wird, um durch die Schaltsteuereinheit (13) geschlossen zu werden, die Ausgabeenden der Spannungsverstärkungseinheit (12) kurzgeschlossen werden.

2. Spannungsregelungsschaltung (9) gemäß Anspruch 1, ferner umfassend:
eine Rückkopplungssteuereinheit (24), die dazu konfiguriert ist, gemäß dem Ausgangssignal der Spannungsregelungsschaltung (9) das durch die Spannungsverstärkungseinheit (12) ausgegebene zweite Spannungssignal zu regeln.

3. Spannungsregelungsschaltung (9) gemäß Anspruch 1 oder 2, wobei die Spannungsverstärkungseinheit (12, 21) spezifisch Folgendes ist:
ein Vollbrückenwandler, ein Halbbrückenwandler (21), ein Gegentaktwandler, ein Durchflusswandler oder ein Sperrwandler.

4. Spannungsregelungsschaltung (9) gemäß einem der Ansprüche 1 bis 3, wobei die Schaltersteuereinheit (13, 23) Folgendes umfasst: einen ersten Abtaster (231), einen ersten Spannungskomparator 232), eine Diode, eine Triode (233) und ein Relais (234), wobei
der erste Spannungskomparator (232) dazu konfiguriert ist, einen Spannungswert mit der ersten Referenzspannung zu vergleichen, wobei der Spannungswert durch den ersten Abtaster (231) abgetastet wird und durch die Hauptschleifeneinheit (11) ausgegeben wird; und
wenn der durch den ersten Abtaster (231) abgetastete Spannungswert größer oder gleich der ersten Referenzspannung ist, der erste Spannungskomparator (232) einen hohen Pegel ausgibt, und dann die Diode, die mit einer Basis der Triode (233) verbunden ist, den hohen Pegel an die Basis ausgibt, sodass das Relais (234), das mit einem Kollektor der (233) Triode verbunden ist, steuert, dass der Kurzschlussschalter (121, 22) geschlossen wird.

5. Spannungsregelungsschaltung (9) gemäß einem der Ansprüche 2 bis 4, wobei die Rückkopplungssteuereinheit (24) Folgendes umfasst: einen zweiten Abtaster (241), einen Subtrahierer (242), einen Proportionsintegrator (243), einen zweiten Spannungskomparator (244) und einen Impulsverteiler (245), wobei
der Subtrahierer (242) dazu konfiguriert ist, einen Subtraktionsvorgang an einer gegebenen zweiten Referenzspannung und einem Ausgangssignal durchzuführen, das durch den zweiten Abtaster (241) abgetastet und durch die Spannungsregelungsschaltung (9) ausgegeben wird;
der Proportionsintegrator (243) dazu konfiguriert ist, eine Integrationsregelung an einem Ausgangssignal des Subtrahierers (242) durchzuführen;
der zweite Spannungskomparator (244) dazu konfiguriert ist, ein Ausgangssignal des Proportionsintegrators (243) mit einer gegebenen Dreieckswelle zu vergleichen; und
der Impulsverteiler (245) ein Antriebssignal gemäß einem durch den zweiten Spannungskomparator (244) ausgegebenen Signal ausgibt, sodass die Spannungsverstärkungseinheit (12, 21) gemäß dem Antriebssignal das durch die Spannungsverstärkungseinheit (12, 21) ausgegebene zweite Spannungssignal regelt.

6. Spannungsregelungsschaltung (9) gemäß einem der Ansprüche 1 bis 5, wobei ein Ausgabeende der Spannungsregelungsschaltung (9) ferner mit einer Induktivität angeordnet ist, die dazu konfiguriert ist, Filtern an dem Ausgangssignal der Spannungsregelungsschaltung (9) durchzuführen.

## Revendications

1. Circuit de régulation de tension (9), comprenant :
une unité de boucle principale (11), configurée pour délivrer, en fonction d'un signal d'entrée d'une source de tension (10, 20), un premier signal de tension dont la valeur de tension est égale à une valeur de tension de la source de tension (10, 20) ; une unité d'amplification de tension (12, 21), configurée pour délivrer un second signal de tension en fonction du signal d'entrée, dans lequel une somme du second signal de tension et du premier signal de tension forme un signal de sortie du circuit de régulation de tension (9) ;
une unité de commande de commutation (13, 23), configurée pour comparer le premier signal de tension avec une première tension de référence prédéfinie, et lorsque le premier signal de tension est supérieur ou égal à la première tension de référence, commander le second signal de tension délivré par l'unité d'amplification de tension (12, 21) de manière à ce qu'il soit égal à zéro ; et
un commutateur de court-circuit (121, 22) relié à l'unité de commande de commutation (13, 23), de sorte que l'unité de commande de commutation (13, 23) commande, lorsqu'il est déterminé que le premier signal de tension est supérieur ou égal à la première tension de référence, la fermeture du commutateur de court-circuit (121, 22), pour permettre au second signal de tension délivré par l'unité d'amplification de tension (12, 21) d'être égal à zéro ;
**caractérisé en ce que**
le commutateur de court-circuit (121, 22) est disposé entre les extrémités de sortie de l'unité d'amplification de tension (12, 21), dans lequel, lorsque la fermeture du commutateur de court-circuit (121, 22) est commandée par l'unité de commande de commutation (13), les extrémités de sortie de l'unité d'amplification de tension (12) sont court-circuitées.

2. Circuit de régulation de tension (9) selon la revendication 1, comprenant en outre :
une unité de commande de rétroaction (24), configurée pour réguler, en fonction du signal de sortie du circuit de régulation de tension (9), le second signal de tension délivré par l'unité d'amplification de tension (12).

3. Circuit de régulation de tension (9) selon la revendication 1 ou 2, dans lequel l'unité d'amplification de tension (12, 21) est spécifiquement :
un convertisseur en pont complet, un convertisseur en demi-pont (21), un convertisseur push-pull, un convertisseur forward ou un convertisseur flyback.

4. Circuit de régulation de tension (9) selon l'une quelconque des revendications 1 à 3, dans lequel l'unité de commande de commutation (13, 23) comprend : un premier échantillonneur (231), un premier comparateur de tension (232), une diode, une triode (233) et un relais (234), dans lequel
le premier comparateur de tension (232) est configuré pour comparer une valeur de tension avec la première tension de référence, dans lequel la valeur de tension est échantillonnée par le premier échantillonneur (231) et délivrée par l'unité de boucle principale (11) ; et
lorsque la valeur de tension échantillonnée par le premier échantillonneur (231) est supérieure ou égale à la première tension de référence, le premier comparateur de tension (232) délivre un niveau haut, puis la diode qui est reliée à une base de la triode (233) délivre le niveau haut à la base, de sorte que le relais (234) qui est relié à un collecteur de la triode (233) commande la fermeture du commutateur de court-circuit (121, 22).

5. Circuit de régulation de tension (9) selon l'une quelconque des revendications 2 à 4, dans lequel l'unité de commande de rétroaction (24) comprend : un second échantillonneur (241), un soustracteur (242), un intégrateur de proportion (243), un second comparateur de tension (244) et un distributeur d'impulsions (245), dans lequel
le soustracteur (242) est configuré pour effectuer une opération de soustraction sur une seconde tension de référence donnée et un signal de sortie qui est échantillonné par le second échantillonneur (241) et délivré par le circuit de régulation de tension (9) ;
l'intégrateur de proportion (243) est configuré pour effectuer une régulation d'intégration sur un signal de sortie du soustracteur (242) ;
le second comparateur de tension (244) est configuré pour comparer un signal de sortie de l'intégrateur de proportion (243) avec une onde triangulaire donnée ; et
le distributeur d'impulsions (245) délivre un signal de commande en fonction d'un signal délivré par le second comparateur de tension (244), de sorte que l'unité d'amplification de tension (12, 21) régule, en fonction du signal de commande, le second signal de tension délivré par l'unité d'amplification de tension (12, 21).

6. Circuit de régulation de tension (9) selon l'une quelconque des revendications 1 à 5, dans lequel une extrémité de sortie du circuit de régulation de tension (9) est en outre dotée d'un inducteur configuré pour effectuer un filtrage sur le signal de sortie du circuit de régulation de tension (9).
